(19) **Europäisches Patentamt**
**European Patent Office**
**Office européen des brevets**

(11) **EP 1 842 883 A2**

(12) **EUROPEAN PATENT APPLICATION**

(43) Date of publication:
**10.10.2007 Bulletin 2007/41**

(51) Int Cl.:
***C09D 5/38*** (2006.01)     ***H01F 1/375*** (2006.01)

(21) Application number: **07105240.1**

(22) Date of filing: **29.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **29.03.2006 JP 2006091005**
**30.03.2006 JP 2006095545**

(71) Applicants:
• **INOAC CORPORATION**
**Nagoya-shi,**
**Aichi 450-8691 (JP)**
• **Ju Teng International Holdings Ltd.**
**Hong Kong (CN)**

• **Sang Broli Company Limited**
**242 Tapei County (TW)**

(72) Inventors:
• **Sugiura, Yoshinori**
**Aichi 456-0054 (JP)**
• **Nakaoka, Ryoichi**
**Osaka 573-1153 (JP)**
• **Kanada, Chika**
**Osaka 573-1153 (JP)**
• **Harada, Akito**
**Osaka 573-1153 (JP)**

(74) Representative: **Viering, Jentschura & Partner**
**Grillparzerstrasse 14**
**81675 München (DE)**

(54) **Coating composition for forming pattern and coated article**

(57)     A coating composition for forming a pattern includes a thermoplastic resin, magnetic particles with flaky form and a specific solvent. As the thermoplastic resin, a vinyl acetate based resin, an acryl based resin or a cellulose acetate butyrate resin is preferable. The specific solvent contains a low boiling point solvent having a boiling point of 50°C or higher and 100°C or lower, and a high boiling point solvent having a boiling point that is higher than 100°C and 200°C or lower. The coating composition for forming a pattern is set so that the viscosity 20 seconds to 60 seconds after application on the surface of an article to be coated is 2,000 mPa•s to 500,000 mPa•s in a normal state, and the viscosity between 60 seconds and 120 seconds after application is no lower than 100,000 mPa•s. In addition, the coating composition is set so that the viscosity between 60 seconds and 120 seconds after application is greater than the viscosity 20 seconds to 60 seconds after application.

**Fig.1**

EP 1 842 883 A2

**Description**

BACKGROUND OF THE INVENTION

The present invention relates to a coating composition for forming a pattern which contains, for example, magnetic particles with flaky form, and forms a pattern by orienting the magnetic particles by applying a magnetic field during or after application of the coating composition to an article which is a non-magnetic body, as well as a coated article.

Conventional methods for applying a coating composition which contains magnetic particles on the surface of an article to be coated, and after that, orienting the magnetic particles using a magnetic field (magnetic field energy) from a magnet so that letters or figures emerge, and thus forming a coating film having a pattern have been proposed. The product coated with a magnetic coating composition disclosed in Japanese Laid-Open Patent Publication No. 5-228427, for example, has a coated film formed on the surface of an article to be coated of a coating composition which includes a great number of microscopic magnetic particles with flaky form. According to this publication, the coated article has a figure or diagram having recesses and projections which emerge with a predetermined diagram as a border where the angles at which the magnetic particles stand are different by approximately 90 degrees to 180 degrees between the two sides of the border. In this case, however, the magnetic particles precipitate or aggregate when the coating composition is stored, or the magnetic particles precipitate in the coating machine at the time of coating. Therefore, distinctness and depth appearance cannot be gained in the border portions of the pattern.

In addition, it has been proposed that a material in which magnetic particles are coated with a synthetic resin or mica coated with magnetic particles be used, in order to reduce the weight of the magnetic particles. In this case, the specific weight of the magnetic particles becomes small, and therefore, it becomes difficult for the magnetic particles to precipitate or aggregate, and thus, a uniform pattern can be gained in comparison with the prior art. However, the synthetic resin and mica are non-magnetic particles, and therefore, it may be impossible to orient the magnetic particles as intended, depending on the conditions for coating, and a satisfactory appearance cannot be gained. In order to solve this problem, a magnetic pattern forming coating composition in which the solid content in the coating film one minute after application of the coating composition is set no higher than 70 weight% has been proposed, as disclosed in, for example, Japanese Laid-Open Patent Publication 2003-176452.

When solvent bone coatings are applied to an article to be coated, the solvent evaporates from the coating film as time elapses, and thus the viscosity of the coating film increases. In this manner, the viscosity of the coating composition generally increases linearly relative to the elapsed time. Meanwhile, it is desirable for the magnetic particles mixed in with the coating composition to be quickly oriented along the lines of magnetic force when a magnetic field is applied, and for this state to be maintained afterward, in order to improve the distinctness and depth appearance of the pattern on the coating film.

The pattern forming coating composition disclosed in Japanese Laid-Open Patent Publication 2003-176452 merely has a solid content of no higher than 70 weight% in the coating film one minute after application of the coating composition. Therefore, even in the case where the magnetic particles in the coating composition are oriented along the lines of magnetic force through application of a magnetic field, the subsequent increase in the viscosity is insufficient, and the orientation of the magnetic particles cannot be maintained. Accordingly, the orientation of the magnetic particles is disturbed, and the distinctness and depth appearance of the pattern on the coating film, as well as the appearance of movement, or a quality that causes a pattern to look like it is moving when the viewing angle changes, do not increase.

SUMMARY OF THE INVENTION

An objective of the present invention is to provide a pattern forming coating composition which can form a pattern having excellent distinctness, depth appearance, and appearance of movement, and a coated article.

To achieve the foregoing objective and in accordance with a first aspect of the present invention, a coating composition for forming a pattern is provided. The coating composition contains a thermoplastic resin, magnetic particles in the flaky form, a low boiling point solvent having a boiling point of 50°C or higher and 100°C or lower, and a high boiling point solvent having a boiling point that is higher than 100°C and 200°C or lower. The viscosity 20 seconds to 60 seconds after application on a surface of an article to be coated is 2,000 mPa·s to 500,000 mPa·s in a normal state. The viscosity between 60 seconds and 120 seconds after application is no lower than 100,000 mPa·s, and is greater than the viscosity 20 seconds to 60 seconds after application. The magnetic particles are oriented by a magnetic field after application, and thus, a coating film having a pattern is formed.

In accordance with a second aspect of the present invention, a coating film having a pattern is formed on an article to be coated by applying the coating composition for forming a pattern according to the first aspect of the present invention on the article to be coated, orienting said magnetic particles by a magnetic field, and then solidifying the coating composition in this state.

In accordance with a third aspect of the present invention, a manufacturing method for the coating composition for forming a pattern according to the first aspect of the present invention is provided. The method includes dissolving a thermoplastic resin in an organic solvent, thereby preparing resin solution, mixing magnetic particles with flaky form in the resin solution, and diluting the resin solution using a diluting solvent in which a low boiling point solvent having a boiling point of 50°C or higher and 100°C or lower, and a high boiling point solvent having a boiling point that is higher than 100°C and 200°C or lower, are mixed together.

BRIEF DESCRIPTION OF THE DRAWINGS

Fig. 1 is a graph showing the relationship between the time elapsed after application and the viscosity of the coating composition;
Fig. 2 is a diagram showing a pattern on the coating film and a movement thereof according to Example 1;
Fig. 3 is a schematic diagram for illustrating the distinctness, depth appearance, and appearance of movement of the pattern on the coating film according to Example 1;
Fig. 4 is a schematic diagram for illustrating the state of light reflected from magnetic particles in the coating film according to Comparative Example 3;
Fig. 5(A) is a graph showing the relationship between the distance of movement and the L* value of the color difference according to Example 1 in the case where the angle of illumination is 10°;
Fig. 5(B) is a graph showing the relationship between the distance of movement and the L* value of the color difference according to Comparative Example 1 in the case where the angle of illumination is 10°;
Fig. 6 (A) is a graph showing the relationship between the distance of movement and the L* value of the color difference according to Example 1 in the case where the angle of illumination is 25°; and
Fig. 6(B) is a graph showing the relationship between the distance of movement and the L* value of the color difference according to Comparative Example 1 in the case where the angle of illumination is 25°.

DETAILED DESCRIPTION OF THE PREFERRED EMBODIMENTS

In the following, the preferred embodiments according to the present invention are described in detail in reference to the drawings.

A coating composition for forming a pattern according to the present embodiment (hereinafter simply referred to as coating composition) contains a thermoplastic resin, magnetic particles with flaky form, and a specific solvent. The thermoplastic resin is highly soluble in the solvent and has such viscosity properties that the viscosity increases exponentially as the solvent evaporates from the solution. As the thermoplastic resin having such viscosity properties, vinyl acetate based resins, acryl based resins and cellulose acetate butyrate resins are preferable. As vinyl acetate based resins, vinyl acetate-vinyl chloride copolymer resins, ethylene-vinyl acetate copolymer resins and the like may be used.

The magnetic particles are for providing a pattern on the coating film, and are oriented along the lines of magnetic force which are created through application of a magnetic field after the coating composition for forming a pattern has been applied to the article to be coated. As the magnetic particles, magnetic particles in flat form, concretely, magnetic particles with flaky form, plate form, sheet form or film form, can be used, so that light can be reflected. These magnetic particles are formed of a ferromagnetic material, such as of iron oxide, nickel, cobalt or an alloy of these. In addition, a pigment of which the particles are coated with a magnetic material can be used as the magnetic particles. That is to say, any well known pigment of which the particles are coated with a magnetic material, such as a magnetic metal, may be used. As the pigment, mica, mica coated with titanium dioxide, aluminum flakes, stainless steel flakes, alumina flakes and glass flakes may be used. As the magnetic metal, nickel, iron, cobalt, and copper may be used. The length of the magnetic particles is approximately 1 $\mu$m to 80 $\mu$m, and the thickness is approximately 0.1 $\mu$m to 20 $\mu$m.

The specific solvent contains a low boiling point solvent having a boiling point of 50°C or higher and 100°C or lower, and a high boiling point solvent having a boiling point that is higher than 100°C and 200°c or lower. The low boiling point solvent and the high boiling point solvent are combined, and the solid contents are set to be within a relatively low range of 5 mass% to 15 mass%, and thus, the viscosity of the coating film immediately after application can be made low. In addition, as time elapses, the low boiling point solvent rapidly evaporates, and in particular, the ratio of the solid content becomes high, and thus, the viscosity of the coating film increases exponentially. Therefore, the magnetic particles in the coating composition are easy to orient along the lines of magnetic force, and subsequently the oriented state of the magnetic particles can be easily maintained.

In addition, the viscosity of the coating film on the coated article is related to the solubility parameter (SP value) of the solvent, not to mention the rate of evaporation of the solvent. The rate of evaporation is measured in accordance with the following method. First, an aluminum can having a radius of 5 mm is placed on a precision balance. Next, 0.1 g of n-butyl acetate is put into the aluminum can. Then, the time it takes for 90% of the n-butyl acetate within the can to evaporate is measured through the reduction in weight, and this time is defined as the standard value (100) for the rate of evaporation. In the case where this time is shorter than in the case of n-butyl acetate (in the case where evaporation is quick), the rate of evaporation is no lower than 100, while in the case where the above described time is longer than the case of n-butyl acetate (in the case where evaporation is slow), the rate of evaporation becomes no higher than 100.

As the low boiling point solvent, methyl ethyl ketone (boiling point: 79.6°C, rate of evaporation: 465, SP value: 9.27), ethyl acetate (boiling point: 75.8°C, rate of evaporation: 525, SP value: 9.08), acetone (boiling point: 57°C, rate of evaporation: 720, SP value: 9.75), isopropyl alcohol (boiling point: 82°C, rate of evaporation: 205, SP value: 11.5) and the like can be used. As the high boiling point solvent, methyl isobutyl ketone (boiling point: 116.7°C, rate of evaporation: 160, SP value: 8.31), n-butyl acetate (boiling point: 126.3°C, rate of evaporation: 100, SP value: 8.47), xylene (boiling point: 142°C), diisobutyl ketone (boiling point: 168.2°C, rate of evaporation: 18, SP value: 8.22), ethylene glycol monobutyl ether (boiling point: 192°C, rate of evaporation: 3, SP value: 8.9), isobutyl acetate (boiling point: 118°C, rate of evaporation: 175, SP value: 8.42), propylene glycol monomethyl ether acetate (boiling point: 146°C, rate of evaporation: 40, SP value: 9.2) and the like can be used.

For the high boiling point solvent, it is preferable to use a combination of a first high boiling point solvent having a boiling point that is higher than 100°C and 150°C or lower, and a second high boiling point solvent having a boiling point that is higher than 150°C and 200°C or lower, because the amount of solvent which evaporates from the coating composition after application can be finely adjusted, and it becomes easy to control the viscosity of the coating composition. As the first high boiling point solvent, methyl isobutyl ketone (boiling point: 116.7 °C), n-butyl acetate (boiling point: 126.3 °C), xylene (boiling point: 142°C) and the like may be used. As the second high boiling point solvent, ethylene glycol monobutyl ether (boiling point: 192 °C), diisobutyl ketone (boiling point: 168.2 °C) and the like may be used.

It is preferable for the coating composition for forming a coating film to contain a dye or a pigment as a coloring agent, so that the decorative effect is enhanced in the pattern on the coating film. As the dye, monoazo dyes, disazo dyes, metal complex salt azo dyes, anthraquinone dyes, indigo based dyes, phthalocyanine dyes, pyrazolone dyes, stilbene dyes, thiazole dyes, quinoline dyes, diphenyl methane dyes, triphenyl methane dyes, acridine dyes, xanthene dyes, azine dyes, thiazine dyes, oxazine dyes, polymethine dyes, indophenol dyes, perylene dyes and the like may be used. As the pigment, organic pigments, such as azolake based pigments, insoluble azo based pigments, condensation azo based pigments, phthalocyanine based pigments, perylene based pigments, dioxazine based pigments, indigo based pigments, quinacridone based pigments, isoindorinone based pigments, benzimidazolone based pigments, diketopyrrolopyrole based pigments, and metal complex pigments may be used. Further, yellow iron oxide, red iron oxide, carbon black, titanium dioxide, metal powder pigments, and interference mica and coloring mica, which are photoluminescent pigments, may be used.

In addition, a hardening agent, such as an amino resin, an isocyanate compound or a block isocyanate compound thereof, an epoxy compound or polycarbodiimide is mixed into the coating composition for forming a coating film, in order to harden the thermoplastic resin or the like. Furthermore, components which are generally mixed in a coating composition, such as antioxidants, leveling agents, antifoaming agents, thickener, and ultraviolet absorbers may be mixed into the coating composition.

Next, the amount of the respective components mixed in with and included in the coating composition is described.

As the solid content in the coating composition for forming a pattern, it is preferable for the amount of thermoplastic resin mixed in to be 60 mass% to 93 mass%, and it is preferable for the amount of the magnetic particles mixed in to be 7 mass% to 35 mass%. In the case where the amount of thermoplastic resin mixed in is less than 60 mass%, there is a risk that the smoothness of the coating film may be lost, or the adhesiveness of the coating film to the article to be coated may lower. Meanwhile, in the case where the amount of thermoplastic resin mixed in exceeds 93 mass%, the amount of the magnetic particles mixed in becomes relatively small, and the coating film cannot be formed with a desired pattern. In addition, in the case where the amount of the magnetic particles mixed in is less than 7 mass%, the color and the pattern of the article to be coated come through, and the amount of the magnetic particles which are oriented through application of a magnetic field is insufficient, and thus, it is difficult to gain a beautiful pattern. Meanwhile, in the case where the amount of the magnetic particles mixed in exceeds 35 mass%, the amount of the magnetic particles becomes excessive, and there is a risk that the magnetic particles may not be well oriented. In addition, there is also a risk that the magnetic particles may precipitate or aggregate in the coating composition, or that cohesion failure may be caused, due to the reduction in the internal cohesion in the coating film.

In addition, as the solid content in the coating composition for forming a pattern, the amount of dye, which is a coloring agent, mixed in is set within a range from 0 mass% to 33 mass%. Here, it is preferable for the total amount of the coloring agent and the magnetic particles mixed in to be 7 mass% to 40 mass% of the solid content of the coating composition for forming a pattern. In the case where the content of the coloring agent exceeds 33 mass%, the dispersibility of the coloring agent in the coating composition becomes low, the color of the coating film becomes too strong and the amounts of coloring agent mixed in and other components are not well-balanced.

It is preferable for the nonvolatile content (solid content) in the coating composition for forming a pattern to be 5 mass% to 15 mass%, so that the initial viscosity after application of the coating composition becomes low and the orientation of the magnetic particles along the lines of magnetic force is accelerated. In the case where the nonvolatile content is less than 5 mass%, the viscosity does not sufficiently increase, even after time has elapsed after application of the coating composition. Therefore, the coating composition easily sags and it becomes difficult to maintain the state of orientation of the magnetic particles. Meanwhile, in the case where the nonvolatile content exceeds 15 mass%, the initial viscosity after application of the coating composition cannot be sufficiently lowered.

The above described coating composition for forming a pattern is manufactured by mixing magnetic particles into a resin solution where a thermoplastic resin is dissolved in an organic solvent, thus preparing a coating composition base, and diluting this coating composition base using a diluting solvent in which the above described low boiling point solvent and the high boiling point solvent are mixed together. In this case, it is desirable to stir sufficiently at the time of preparation of the resin solution, mixture of the magnetic particles and diluting with the diluting solvent, in order for the thermoplastic resin to dissolve and for the magnetic particles to disperse. When dispersing the magnetic particles, a dispersing agent may be used in such an amount that the adhesiveness and the like are not affected. In addition, though the composition of the diluting solvent and the amount of coating composition base and diluting solvent mixed in are not particularly limited, they are set so that the conditions for the viscosity of the coating composition after application can be satisfied.

As for the composition of the diluting solvent, it is preferable for the low boiling point solvent to be 40 mass% to 75 mass%, for the first high boiling point solvent to be 5 mass% to 10 mass%, and for the second high boiling point solvent to be 20 mass% to 55 mass%. When the amount of low boiling point solvent mixed in is higher, the initial viscosity after application of the coating composition can be lowered, and orientation of the magnetic particles becomes easy. In addition, when the amount of the second high boiling point solvent mixed in is higher, the increase in the viscosity of the coating composition after being applied accelerates. Furthermore, when a small amount of the first high boiling point solvent is mixed in, the viscosity of the coating composition can be controlled with high precision. In this case, the coating composition is usually set to have a viscosity of as low as 60 mPa·s to 80 mPa·s. Therefore, the work of application is easy.

In addition, the coating composition is set so that the viscosity 20 seconds to 60 seconds after application on the surface of the article to be coated is 2,000 mPa·s to 500,000 mPa·s in a normal state. Thus, when the initial viscosity after application of the coating composition is relatively low, the magnetic particles can be oriented along the lines of magnetic force through application of a magnetic field. Here, normal state means an atmosphere (environment) where the temperature is 15°C to 35°C and the relative humidity is 40% to 90%. In the case where the viscosity is less than 2,000 mPa·s, the viscosity of the coating composition is low and the fluidity of the applied coating composition is high, and therefore, the coating composition easily sags, making the work of application difficult, and the desired film thickness cannot be gained. Meanwhile, in the case where the viscosity exceeds 500,000 mPa*s, the viscosity of the coating composition is high, and thus, orientation of the magnetic particles is prevented, and the distinctness, the depth appearance and the appearance of movement cannot be gained in the pattern on the coating film.

Furthermore, the coating composition is set so that the viscosity between 60 seconds and 120 seconds after application is no lower than 100,000 mPa·s. The viscosity of no lower than 100,000 mPa·s includes a state where the viscosity is too high, making measurement impossible, and a state where the coating composition is solidified. When the viscosity is set this high, the magnetic particles can be fixed in an oriented state. Meanwhile, in the case where the viscosity is less than 100,000 mPa·s, the orientation of the magnetic particles which are oriented by the magnetic field cannot be maintained, and thus, the orientation is disturbed and the desired pattern for the coating film cannot be gained.

Furthermore, the coating composition is set so that the viscosity between 60 seconds and 120 seconds after application is greater than the above described viscosity 20 seconds to 60 seconds after application. That is to say, the coating composition is set so that the viscosity at a later stage becomes higher than the initial viscosity after application of the coating composition. When the viscosity is set in this manner, orientation and fixture of the magnetic particles can be achieved. In the case where the coating composition is set so that the viscosity is the opposite of that described above, the magnetic particles are not oriented along the lines of magnetic force, and the magnetic particles cannot be secured. In the case where the coating composition is applied to an article to be coated, the above described conditions for the viscosity should only be satisfied, and the coating composition can be additionally treated using a heating means or the like, in order to accelerate the adjustment of the viscosity.

The operation of the present embodiment will now be described.

The coating composition for forming a pattern is prepared by mixing magnetic particles into a solution where a thermoplastic resin is dissolved in an organic solvent, and diluting the solution using a diluting solvent where a predetermined low boiling point solvent and a high boiling point solvent are mixed together. In this case, the solution includes the low boiling point solvent, and the initial viscosity after application of the coating composition is set relatively low. Therefore, when the gained coating composition is applied to an article to be coated, the magnetic particles are rapidly oriented along the lines of the magnetic force created by a magnetic field. In addition, the low boiling point solvent in the coating composition evaporates rapidly at a later stage after application of the coating composition, and therefore, the viscosity of the coating composition increases drastically, and thus, the magnetic particles are secured in an oriented state.

Accordingly, when light hits the uniformly oriented magnetic particles in the coating film, reflected light is also oriented uniformly, and therefore, the contrast between portions from which light is reflected (bright portions created by strong reflected light) and other portions (dark portions without reflected light) becomes high, and the border portions in the pattern become more clear. In addition, the magnetic particles located deep within the coating film are oriented in the same direction as the magnetic particles in shallow locations, and therefore, light reflected from the magnetic particles in deep locations can be seen together with light reflected from the magnetic particles in shallow locations, so that the depth of the pattern can be felt. Additionally, when the eyes are moved, the direction of the coated article changes or the direction of light changes, light reflected from uniformly oriented magnetic particles in different locations can be seen, so that it looks as if the border portions in the pattern have moved.

According to the present embodiment, the following advantages can be gained.

(1) The coating composition for forming a pattern includes a low boiling point solvent having a boiling point of 50°C or higher and 100°C or lower, and a high boiling point solvent having a boiling point that is higher than 100°C and 200°C or lower. In addition, the coating composition is set so that the viscosity 20 seconds to 60 seconds after application is 2,000 mPa·s to 500,000 mPa·s, and the viscosity between 60 seconds to 120 seconds after application is no lower than 100,000 mPa·s. In addition, the coating composition is set so that the latter viscosity is greater than the former viscosity. As a result, the viscosity of the coating composition is low when the magnetic particles are oriented by the magnetic field after application of the coating composition, and the subsequent viscosity of the coating composition increases exponentially. Accordingly, when the viscosity of the coating composition becomes high after the magnetic particles have been oriented along the lines of magnetic force or the coating composition is solidified, the oriented state of the magnetic particles is maintained. As a result, a pattern having excellent distinctness, depth appearance, and appearance of movement can be developed.

(2) The thermoplastic resin is specifically a vinyl acetate-vinyl chloride copolymer resin, an acryl based resin, or a cellulose acetate butyrate resin. In this case, the viscosity of the coating composition can be easily controlled on the basis of the properties of these resins.

(3) The nonvolatile content of the coating composition for forming a pattern is set to 5 mass% to 15 mass%, and thus, the content of the solvent can be increased so that the initial viscosity after application of the coating composition is low and the magnetic particles can be easily oriented.

(4) The coating composition for forming a pattern is prepared by mixing magnetic particles into a solution where a thermoplastic resin is dissolved in an organic solvent and diluting the solution using a diluting solvent where a predetermined low boiling point solvent and a high boiling point solvent are mixed together. Thus, the coating composition for forming a pattern having the above described effects can be easily prepared with a simple operation.

(5) A combination of a first high boiling point solvent having a boiling point that is higher than 100°C and 150°C or lower, and a second high boiling point solvent having a boiling point that is higher than 150°C and 200°C or lower is used as the high boiling point solvent. Thus, the amount of evaporation of the solvent can be finely adjusted and the viscosity of the coating composition can be controlled more easily.

(Examples)

in the following, the present embodiment is concretely described by citing examples and comparative examples. The present invention is not limited to these examples. In the respective examples, "parts" means "parts by mass" and "%" means "mass%," unless stated otherwise.

First, three types of coating compositions shown in the following were prepared as the coating composition base.

(Coating composition A)

381 parts of methyl isobutyl ketone (MIBK) and 164 parts of methyl ethyl ketone (MEK) were put into a container made of stainless steel with a stirring apparatus attached, and while they were being stirred, 130 parts of a vinyl acetate-vinyl chloride copolymer resin (trade name: VMCH, made by Dow Chemical Company) was added, and thus, a resin solution was prepared. 70 parts of xylene and 18 parts of an anthraquinone based dye (trade name: Plast Blue 8550, made by Arimoto Chemical Co., Ltd.) were added to the resin solution, which was sufficiently stirred so that the solids were dissolved. Next, 23 parts of magnetic particles (iron oxide in plate or flake form, trade name: AM-200, made by Titanium Industry Co., Ltd.) were added, and while the mixture was being stirred, 212 parts of n-butyl acetate was additionally added so that coating composition A was gained after the mixture had been stirred sufficiently. The nonvolatile content of coating composition A was 17%.

(Coating composition B)

Using the same method as the manufacturing method for coating composition A, coating composition B was gained by adding the materials shown in the following in sequence. The nonvolatile content of coating composition B was 17%.

| | |
|---|---|
| Acryl resin solution a shown in the following | 120 parts |
| Acryl resin solution b shown in the following | 90 parts |
| Rheological agent (trade name: AZS-522, made by Nippon Paint Co., Ltd.) | 40 parts |
| Anthraquinone based dye (trade name: Plast Blue 8550, made by Arimoto Chemical Co., Ltd.) | 20 parts |
| Magnetic particles (trade name: AM-200, made by Titanium Industry Co., Ltd.) | 22 parts |
| Ethyl acetate | 245 parts |
| Xylene | 100 parts |
| n-butyl acetate | 286 parts |

(Coating composition C)

Using the same method as the manufacturing method for coating composition A, coating composition C was gained by adding the materials shown in the following in sequence. The nonvolatile content of coating composition C was 17%.

| | |
|---|---|
| Acryl resin solution a shown in the following | 120 parts |
| Acryl resin solution b shown in the following | 90 parts |
| Rheological agent (trade name: AZS-522, made by Nippon Paint Co., Ltd.) | 40 parts |
| Phthalocyanine pigment paste | 20 parts |

(made by Nippon Bee Chemical Co., Ltd., 16.5 parts of a phthalocyanine pigment, 57.0 parts of acryl resin solution a shown in the following, 2.3 parts of ethylene glycol monobutyl ether, 8.8 parts of methyl isobutyl ketone and 8.8 parts of toluene, where the solid content of the pigment paste was 48%, the concentration of the pigment in the pigment paste was 16.5% and the concentration of the pigment in the solid content of coating composition A was 34.4%)

| | |
|---|---|
| Magnetic particles (trade name: AM-200, made by Titanium Industry Co., Ltd.) | 22 parts |
| Ethyl acetate | 230 parts |
| Xylene | 90 parts |
| n-butyl acetate | 253 parts |

(Coating composition D)

Using the same method as the manufacturing method for coating composition A, coating composition D was gained by adding the materials shown in the following in sequence. The nonvolatile content of coating composition D was 17%.

| | |
|---|---|
| Acryl resin solution a shown in the following | 14 parts |
| Acryl resin solution b shown in the following | 14 parts |
| Cellulose acetate butyrate resin | 50 parts |
| (made by Eastman Chemical Company of 20% of CAB 531-1 and 20% of solid content, where the mass ratio of n-butyl acetate/MEK = 70/10) | |
| Anthraquinone based dye | 3 parts |
| (trade name: Plast Blue 8550, made by Arimoto Chemical Co., Ltd.) | |
| Magnetic particles (trade name: AM-200, made by Titanium Industry Co., Ltd.) | 7 parts |
| Ethyl acetate | 50 parts |
| n-butyl acetate | 40 parts |

(continued)

| | |
|---|---|
| Methyl ethyl ketone | 22 parts |
| (Acryl Resin Solution a) | |

17 parts of toluene and 10 parts of n-butyl acetate were put into a polymerization reaction container having a stirring machine, a thermometer, a reflux pipe, a dropping funnel, a nitrogen introduction pipe and a heating apparatus with a thermostat, and while they were being stirred, the temperature was gradually increased to 110°C. Next, a monomer mixture solution of 40 parts of methyl methacrylate, 15 parts of styrene, 7 parts of 2-hydroxy ethyl methacrylate, 37 parts of ethyl hexyl acrylate and 1 part of methacrylic acid and a polymerization initiator solution made of 15 parts of toluene, 5 parts of n-butyl acetate and 0.8 parts of t-butyl peroxy-2-ethyl hexanate were respectively put in separate dropping funnels so that they were dropped over a period of three hours, and thus, a polymerization reaction occurred. During this time, the polymerization reaction solution was being stirred and the temperature was maintained at 110°C.

Subsequently, a polymerization initiator solution made of 5 parts of toluene, 5 parts of n-butyl acetate and 0.2 parts of t-butyl peroxy-2-ethyl hexanate was dropped over a period of two hours while the temperature of the polymerization reaction solution was maintained at 110°C, and thus the polymerization reaction was completed. After that, the temperature of the polymerization reaction solution was lowered to 80°C, 33 parts of toluene and 10 parts of n-butyl acetate were added in sequence, and thus, an acryl resin solution (acryl resin varnish) a was gained. The resin solid content of this acryl resin solution a was 50% and the mass average molecular weight was 49,000 through the conversion of the results of measurement using gel permeation chromatography to its equivalent in polystyrene standard. The resin solid content was measured in the following.

$$\mathrm{Resin\ solid\ content\ (\%) = (Y/X) \times 100}$$

X: amount (g) of sample of acryl resin solution a
Y: mass (g) after drying the sample of acryl resin solution a in a drying oven for three hours at 110°C

(Acryl Resin Solution b)

20 parts of xylene and 10 parts of MIBK were put into a polymerization reaction container having a stirring machine, a thermometer, a reflux pipe, a dropping funnel, a nitrogen introduction pipe and a heating apparatus with a thermostat, and while they were being stirred, the temperature was gradually increased to 130°C. Next, a monomer mixture solution of 61 parts of methyl methacrylate. 15 parts of styrene, 2.5 parts of 2-hydroxy ethyl methacrylate, 20 parts of ethyl hexyl acrylate and 1.5 parts of methacrylic acid and a polymerization initiator solution made of 20 parts of xylene, 10 parts of MIBK and 1.1 parts of t-butyl peroxy-2-ethyl hexanate were respectively put in separate dropping funnels so that they were dropped over a period of three hours, and thus, a polymerization reaction occurred. During this time, the polymerization reaction solution was being stirred and the temperature was maintained at 130°C.

Subsequently, a polymerization initiator solution made of 10 parts of xylene, 5 parts of MIBK and 0.4 parts of t-butyl peroxy-2-ethyl hexanate was dropped over a period of two hours while the temperature of the polymerization reaction solution was maintained at 130°C. This completed the polymerization reaction. After that, the temperature of the polymerization reaction solution was lowered to 80°C, 10 parts of xylene and 15 parts of MIBK were added in sequence, and thus, an acryl resin solution (acryl resin varnish) b was gained. The resin solid content of this acryl resin solution b was 50% and the mass average molecular weight was 16,000 through the conversion of the results of measurement using gel permeation chromatography to its equivalent in polystyrene standard. The method for measuring the resin solid content was the same as in the case of acryl resin solution a.

Next, methyl ethyl ketone, ethyl acetate, n-butyl acetate and diisobutyl ketone were used, and three types of diluting solvents α, β and γ were prepared as shown in Table 1.

(Table 1)

| | Diluting solvent α | Diluting solvent β | Diluting solvent γ |
|---|---|---|---|
| Methyl ethyl ketone (%) | 23 | 23 | 23 |
| Ethyl acetate (%) | 39 | 19 | 51 |
| n-butyl acetate (%) | 6 | 6 | 6 |

(continued)

|  | Diluting solvent $\alpha$ | Diluting solvent $\beta$ | Diluting solvent $\gamma$ |
|---|---|---|---|
| Diisobutyl ketone (%) | 32 | 52 | 20 |

(Example 1)

Four ABS resin plates (black, length: 20 cm, width: 15 cm, and thickness: 0.1 cm) which were commercially available were prepared as articles to be coated, and the surface on which the coating composition was to be applied was wiped with isopropyl alcohol. The N pole side of a magnet in disc form (diameter: 40 mm, thickness: 2 mm) was made in contact with the rear surface of one of these ABS resin plates, and the magnet was pasted there with an adhesive tape, and thus, a test piece for an coating film with a pattern was prepared. The remaining three ABS resin plates were used for measuring the viscosity of the coating composition 30 seconds, 60 seconds and 90 seconds after application of the coating composition. 100 parts of coating composition A and 100 parts of diluting solvent $\alpha$ were mixed and stirred, and thus, the coating composition for forming a pattern according to Example 1 was prepared. The nonvolatile content at the time of application of this coating composition for forming a pattern was 8.5%.

Then, a spray gun (trade name: Wider 100, made by Anest Iwata Corporation) was used in an atmosphere where the temperature was 20°C and the relative humidity (RH) was 65%, and the coating composition for forming a pattern was sprayed against and applied to the surface of the four ABS resin plates so that the dried film thickness was approximately 10 $\mu$m. The test pieces for the coating film with a pattern were left for 10 minutes in the above described atmosphere. Meanwhile, as for the three ABS resin plates for measuring the viscosity, the coating film was scraped off immediately after 30 seconds, 60 seconds and 90 seconds had elapsed after application through spraying in the above described atmosphere, and an RR type viscometer and an RL type viscometer (trade names: VISCOMETER CONTROLLER RC-500, both are made by Toki Sangyo Co., Ltd.) were used in an airtight state, and thus, spring relaxation was measured at 20°C. In addition, the viscosities when the shearing rate was 0.1 (1/sec) are shown in Table 2. As shown in Table 2, the viscosity of the coating composition (coating film) 30 seconds after application was 76,000 mPa·s, the viscosity of the coating composition 60 seconds after application was 220,000 mPa·s and the viscosity of the coating composition 90 seconds after application was too high, making measurement using the above described viscometers impossible.

As for the test piece for an coating film with a pattern, a clear coating composition was applied after being left for 10 minutes so that the dry film thickness became approximately 30 $\mu$m, and the test piece was put in a drying oven after being left for 10 minutes and was dried for 30 minutes at 80°C. The magnet in disc form which had been pasted to the rear surface of the ABS resin plate was removed before the clear coating composition was applied. As the clear coating composition, a mixture of 100 parts of a main agent (trade name: R240 CI, made by Nippon Bee Chemical Co., Ltd.), 16 parts of a hardening agent (trade name: R255, made by Nippon Bee Chemical Co., Ltd.) and 30 parts of a diluting solvent (trade name: Diluting Thinner for R240, made by Nippon Bee Chemical Co., Ltd.) which were stirred was used.

The thus gained coating film with a pattern was evaluated in terms of distinctness, depth appearance, appearance of movement, and smoothness of the surface of the coating film on the basis of the standard shown in the following where the value of the visual judgments by 10 people, including a coating composition designer and a person in charge of design, were averaged. Furthermore, the adhesiveness of the coating film was measured in accordance with the method shown in the following. The results are shown in Table 2.

(Distinctness)

1: border portions in the pattern were very clearly observed, 2: border portions in the pattern were clearly observed, 4: border portions in the pattern were indistinctly.

(Depth appearance)

1: depth was observed in the pattern and excellent depth appearance was provided, 2: depth was observed in the pattern and good depth appearance was provided, 4: no depth was observed and sufficient depth appearance was not provided.

(Appearance of Movement)

1: when the eyes are shifted to different locations, the movement of the border portions in the pattern is clearly observed and the pattern changes significantly, 2: when the eyes are shifted to different locations, the movement of the border portions in the pattern is observed and the pattern changes, 4: even when the eyes are shifted to different locations, the movement of the border portions in the pattern is not clearly observed and the pattern barely changes.

(Smoothness of the surface of the coating film)

2: the surface of the coating film was smooth and good, 4: roughness was felt on the surface of the coating film, which was not good.

(Adhesiveness)

An adhesion cross-cut test was performed following JIS K5400 8.5.2, where the coating film was cut with a cutter on the surface so that 100 squares of 2 mm were prepared and an adhesive tape was forcefully peeled after being pasted on the top of the squares, and judgments were made in accordance with the following standard.
2: no square was peeled, 4: one or more squares were peeled.

(Example 2)

In Example 1, no clear coating composition was applied, and only the coating composition for forming a pattern was applied and left for 10 minutes after application, and subsequently, dried for 30 minutes at 80°C in a drying oven, and thus, an coating film was formed. The distinctness, depth appearance, appearance of movement, smoothness of the surface of the coating film, and adhesiveness of this coating film were measured in the same manner as in Example 1, and the results are shown in Table 2.

(Example 3)

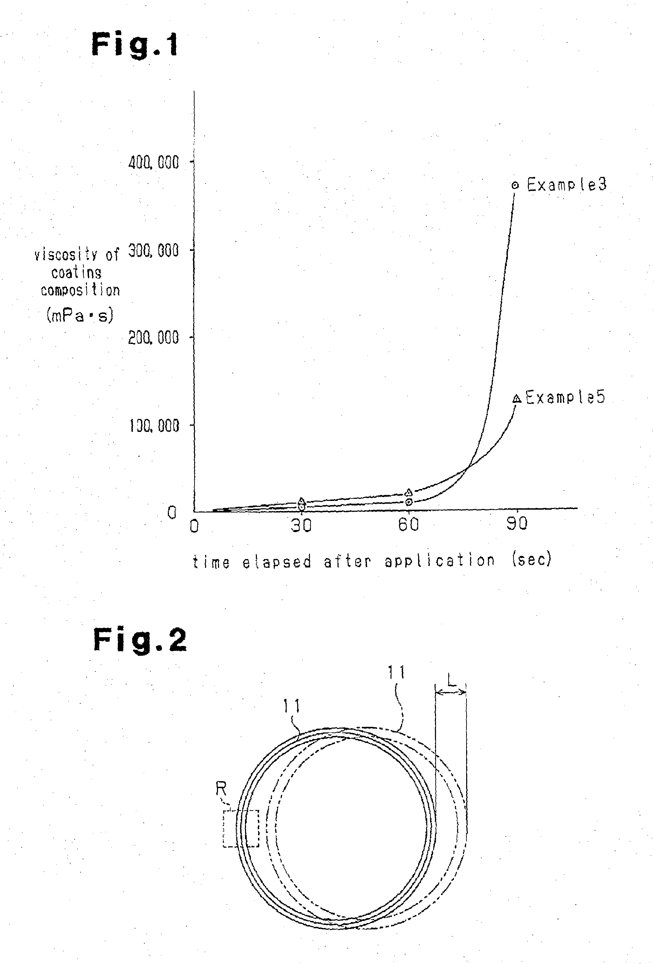

A mixture of coating composition A and diluting solvent $\beta$ at a ratio of 1: 1 was used as the coating composition for forming a pattern. Except for this, a coating film was formed in the same manner as in Example 1. The distinctness, depth appearance, appearance of movement, smoothness of the surface of the coating film, and adhesiveness of this coating film were measured in the same manner as in Example 1, and the results are shown in Table 2. In addition, the relationship of the time (seconds) that had elapsed after application of the coating composition and the viscosity (mPa·s) of the coating composition in this Example 3 is shown in Fig. 1. It becomes clear from Fig. 1 that the viscosity of the coating composition was low until 60 seconds after application and increased exponentially during the time after 60 seconds had elapsed and before 90 seconds had elapsed.

(Example 4)

A mixture of coating composition A and diluting solvent $\gamma$ at a ratio of 1: 1 was used as the coating composition for forming a pattern. Except for this, a coating film was formed in the same manner as in Example 1. The distinctness, depth appearance, appearance of movement, smoothness of the surface of the coating film, and adhesiveness of this coating film were measured in the same manner as in Example 1, and the results are shown in Table 2.

(Example 5)

A mixture of coating composition B and diluting solvent $\alpha$ at a ratio of 1: 1 was used as the coating composition for forming a pattern. Except for this, a coating film was formed in the same manner as in Example 1. The distinctness, depth appearance, appearance of movement, smoothness of the surface of the coating film, and adhesiveness of this coating film were measured in the same manner as in Example 1, and the results are shown in Table 2. In addition, the relationship of the time (seconds) that had elapsed after application of the coating composition and the viscosity (mPa·s) of the coating composition in this Example 5 is shown in Fig. 1. As a result, it was shown that the viscosity of the coating composition was low until 60 seconds after application and increased exponentially during the time after 60 seconds had elapsed and before 90 seconds had elapsed.

(Example 6)

A mixture of coating composition C and diluting solvent $\alpha$ at a ratio of 1: 1 was used as the coating composition for forming a pattern. Except for this, a coating film was formed in the same manner as in Example 1. The distinctness, depth appearance, appearance of movement, smoothness of the surface of the coating film, and adhesiveness of this coating film were measured in the same manner as in Example 1, and the results are shown in Table 2.

(Example 7)

In Example 1, a coating film was formed in accordance with a method where a magnet in disc form was not pasted in advance to the rear surface of the ABS resin plate, and instead, the N pole of the magnet in disc form was placed in the location as close as 1 mm above the coating film immediately after application of the coating composition for forming a pattern on the surface of the ABS resin plate. The distinctness, depth appearance, appearance of movement, smoothness of the surface of the coating film, and adhesiveness of this coating film were measured in the same manner as in Example 1, and the results are shown in Table 2.

(Example 8)

A mixture of coating composition B and diluting solvent β at a ratio of 1: 1 was used as the coating composition for forming a pattern. Thus, the coating composition for forming a pattern was applied on the surface of the ABS resin plates, which were put in a drying oven at 80°C after 45 seconds had elapsed so that the coating composition was intentionally dried for 45 seconds, and then the plates were taken out, and thus, samples for measuring the viscosity and a plate with a coating film where a pattern was formed were prepared. This plate with a coating film where a pattern was formed was further left for 8 minutes and 30 seconds at 20°C, and after that, a clear coating composition was applied in the same manner as in Example 1, and afterwards, processing was carried out in the same manner as in Example 1. The distinctness, depth appearance, appearance of movement, smoothness of the surface of the coating film, and adhesiveness of the thus gained coating film were measured in the same manner as in Example 1, and the results are shown in Table 2.

(Table 2)

| | | Examples | | | | | | | |
|---|---|---|---|---|---|---|---|---|---|
| | | 1 | 2 | 3 | 4 | 5 | 6 | 7 | 8 |
| viscosity (mPa•s) | 30 seconds after application | 76,000 | 76,000 | 4,870 | 104,000 | 10,000 | 70,000 | 76,000 | 2100 |
| | 60 seconds after application | 220,000 | 220,000 | 10,000 | 300,000 | 20,000 | 150,000 | 220,000 | not measured |
| | 90 seconds after application | impossible to measure | impossible to measure | 368,000 | impossible to measure | 123,000 | impossible to measure | impossible to measure | not measured |
| type of coating composition | | A | A | A | A | B | C | A | B |
| diluting solvent | | α | α | β | Y | α | α | α | β |
| nonvolatile content (%) | | 8.5 | 8.5 | 8.5 | 8.5 | 8.5 | 8.5 | 8.5 | 8.5 |
| clear coating composition applied or not | | yes | no | yes | yes | yes | yes | yes | yes |
| form of magnet | | disc form | disc form | disc form | disc form | disc form | disc form | disc form | disc form |
| location where and time when magnet is pasted | | rear before application | rear before application | rear before application | rear before application | rear before application | rear before application | front after application | rear before application |
| intentionally dried or not | | no | no | no | no | no | no | no | yes |
| distinctness | | 1 | 1 | 1 | 1 | 1 | 2 | 2 | 2 |
| depth appearance | | 1 | 1 | 1 | 1 | 1 | 2 | 2 | 2 |
| appearance of movement | | 1 | 1 | 1 | 1 | 2 | 2 | 2 | 2 |
| smoothness of the surface of the coating film | | 2 | 2 | 2 | 2 | 2 | 2 | 2 | 2 |
| adhesiveness | | 2 | 2 | 2 | 2 | 2 | 2 | 2 | 2 |

In Examples 1 to 8, a vinyl acetate-vinyl chloride copolymer resin or an acryl resin was diluted with a predetermined diluting solvent, and thus, the coating composition for forming a pattern was set so that the viscosity came within a predetermined range 30 seconds, 60 seconds and 90 seconds after application. Therefore, as shown in Table 2, the distinctness, depth appearance, appearance of movement in the pattern and smoothness of the surface of the coating film on the coating film became excellent, and the adhesiveness of the coating film to an ABS resin plate was excellent in the respective examples.

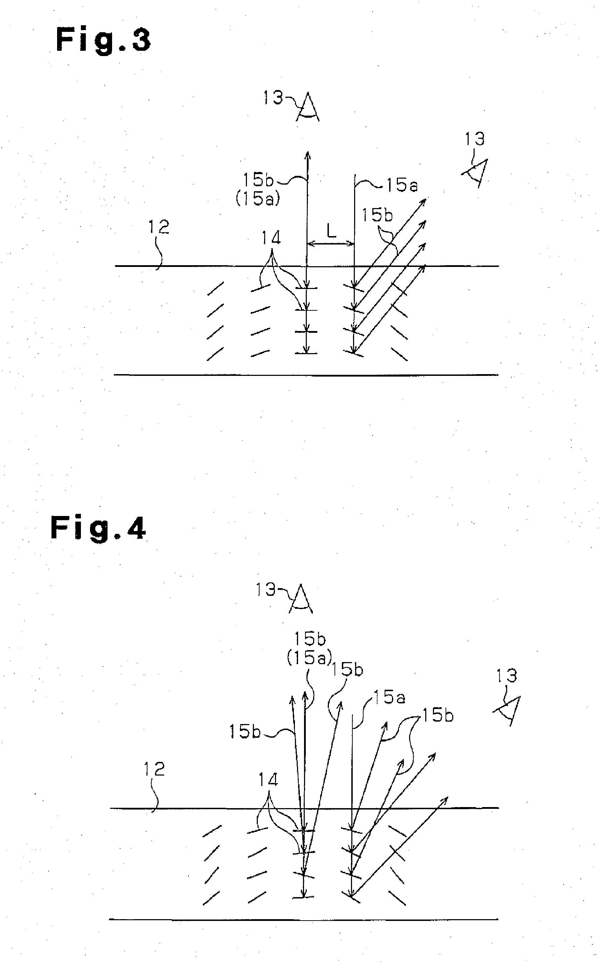

The reason why distinctness, depth appearance and appearance of movement could be developed in the pattern on the coating film in Example 1 is described in reference to Figs. 2 and 3. As shown in Fig. 2, a clear circle pattern 11, as shown by the solid lines, can be observed when viewed directly from above the coating film. When the eye turns to the right, this circle pattern 11 moves to the right (double dotted chain lines in Fig. 2). The distance L over which the pattern has moved is the distance moved.

As shown in Fig. 3, when observed from directly above the coating film 12 by the eye 13, incident light 15a hits and is reflected from magnetic particles 14 which are oriented in the horizontal direction, so that reflected light 15b is directed upward and enters the eye 13. At this time, the reflected light 15b is intensified, because the magnetic particles 14 are uniformly oriented in the horizontal direction. Accordingly, the above described circle pattern 11 can be clearly seen. Furthermore, the magnetic particles 14 located in deep portions of the coating film 12 (lower portion in Fig. 3) are also oriented horizontally, so that reflected light 15b from these magnetic particles 14 also enters the eye, and therefore, depth appearance is gained in the pattern 11.

Subsequently, as the eye 13 turns to the right (approximately 45 degrees), incident light 15a hitting the magnetic particles 14 which are inclined to the right (approximately 22.5 degrees) from among the magnetic particles 14 is reflected, so that reflected light 15b is perceived by the eye 13. At this time also, the magnetic particles 14 which are inclined to the right are uniformly oriented at this angle, and therefore, reflected light 15b is intensified, and thus, the pattern 11 can be clearly seen. Accordingly, the pattern 11 is perceived as if it had moved by the distance L.

(Examples 9 to 13)

In Examples 9 to 11, the coating film was gained in the same manner as in Example 1, except that the form of the magnet which was in disc form in Example 1 was changed to star shape, heart shape and rod form, respectively. In Example 12, the coating film was gained in the same manner as in Example 1, except that the form of the magnet which was in disc form in Example 1 was changed to star shape and the nonvolatile content in the coating composition for forming a pattern was changed to 12%. In Example 13, the coating film was gained in the same manner as in Example 1, except that the type of the coating composition, which was coating composition A in Example 1, was changed to coating composition D. The distinctness, depth appearance, appearance of movement, smoothness of the surface of the coating film, and adhesiveness of the gained coating films were measured in the same manner as in Example 1, and the results are shown in Table 3.

(Comparative Example 1)

The coating film was gained in the same manner as in Example 1, except that coating composition A was prepared using diluting solvent α so that the nonvolatile content became 16%. The distinctness, depth appearance, appearance of movement, smoothness of the surface of the coating film, and adhesiveness of the gained coating film were measured in the same manner as in Example 1, and the results are show in Table 3.

(Comparative Example 2)

The coating film was gained in the same manner as in Example 1, except that coating composition A was prepared using diluting solvent α so that the nonvolatile content became 3.5%. In this case, the coating composition for forming a pattern has a low viscosity, and thus, sagging happen at the time of application of the coating composition, and a normal coating composition film could not be formed. The distinctness, depth appearance, appearance of movement, smoothness of the surface of the coating film, and adhesiveness of the gained coating film were measured in the same manner as in Example 1, and the results are show in Table 3.

(Comparative Example 3)

The coating film was gained in the same manner as in Example 1, except that coating composition B was prepared using diluting solvent β so that the nonvolatile content became 8.5%. The distinctness, depth appearance, appearance of movement, smoothness of the surface of the coating film, and adhesiveness of the gained coating film were measured in the same manner as in Example 1, and the results are show in Table 3.

(Table 3)

| | | Examples | | | | | Comparative Examples | | |
|---|---|---|---|---|---|---|---|---|---|
| | | 9 | 10 | 11 | 12 | 13 | 1 | 2 | 3 |
| viscosity (mPa•s) | 30 seconds after application | 76,000 | 76,000 | 76,000 | 140,000 | 90,000 | 400,000 | 610 | 2,100 |
| | 60 seconds after application | 220,000 | 220,000 | 220,000 | 500,000 | 350,000 | impossible to measure | 900 | 5,000 |
| | 90 seconds after application | impossible to measure | impossible to measure | impossible to measure | impossible to measure | impossible to measure | impossible to measure | 1,090 | 50,000 |
| type of coating composition | | A | A | A | A | D | A | A | B |
| diluting solvent | | α | α | α | α | α | | α | β |
| nonvolatile content (%) | | 8.5 | 8.5 | 8.5 | 12.0 | 8.5 | 16.0 | 3.5 | 8.5 |
| clear coating composition applied or not | | yes | yes | yes | yes | yes | yes | yes | yes |
| form of magnet | | star shape | heart shape | rod form | star shape | disc form | disc form | disc form | disc form |
| location where and time when magnet is pasted | | rear before application | rear before application | rear before application | rear before application | rear before application | rear before application | rear before application | rear before application |
| intentionally dried or not | | no | no | no | no | no | no | no | no |
| distinctness | | 1 | 1 | 1 | 1 | 1 | 4 | 4 | 4 |
| depth appearance | | 1 | 1 | 1 | 1 | 1 | 2 | 4 | 2 |
| appearance of movement | | 1 | 1 | 1 | 1 | 1 | 2 | 4 | 4 |
| smoothness of the surface of the coating film | | 2 | 2 | 2 | 2 | 2 | 4 | 4 | 2 |
| Adhesiveness | | 2 | 2 | 2 | 2 | 2 | 2 | 2 | 2 |

As shown in table 3, though the form of the magnet was changed in Examples..9 to 11, this had no effect on the results, and excellent results were gained, as in Example 1.

In Example 12, though the form of the magnet was changed, and the nonvolatile content of the coating composition for forming a pattern was increased to 12%, this had no effect on the results, and excellent results were gained, as in Example 1. Meanwhile, in Comparative Example 1, the viscosity 60 seconds after application of the coating composition was too high, making measurement impossible, and thus, orientation of the magnetic particles was insufficient, distinctness could not be gained for the pattern on the coating film, and smoothness could not be gained on the surface of the coating film. In Comparative Example 2, the viscosities 30 seconds and 60 seconds after application of the coating composition were extremely low, and the viscosity was low even 90 seconds after application, and therefore, the sagging of the composition was happening at the time of application, and excellent distinctness, depth appearance and appearance of movement could not be gained for the pattern on the coating film. In Comparative Example 3, the viscosity 90 seconds after application was low, and thus, appearance of movement could not be gained for the pattern on the coating film.

The pattern in Comparative Example 3 is described in reference to Fig. 4. In Comparative Example 3, though directivity was perceived to a certain degree in the magnetic particles 14, the magnetic particles were not oriented uniformly, and therefore, reflected light 15b was not oriented uniformly when the pattern was observed by the eye 13 from directly above the coating composition film 12 or observed by the eye 13 from a direction diagonally to the right, and the pattern 11 could not be clearly perceived. Accordingly, even in the case where a point where the pattern could be clearly seen was found when the eye 13 was moved, it was very limited and the point was not stable, and thus, practically no movement could be observed.

In addition, in the case of Example 1 and Comparative Example 1, the L value (L* value) of the color difference was measured by measuring microscopic brightness, in order to confirm specifically the distinctness and appearance of movement. That is to say, the brightness (L* value) was measured on the basis of L*a*b* color expressing system as defined in JIS Z 8729. Concretely, an apparatus for measuring microscopic brightness was used, and the region R surrounded by the broken line in Fig. 2 (concretely, a region of a length of 9.2 mm and a width of 9.2 mm) was irradiated with light under the conditions described in the following, in such a manner that light was received from directly above 100 points on the coating film during movement from the left to the right in the figure, and thus, the L* value was measured.

Angle of irradiation with light:    10° and 25°
Time for exposure to light:    100 msec

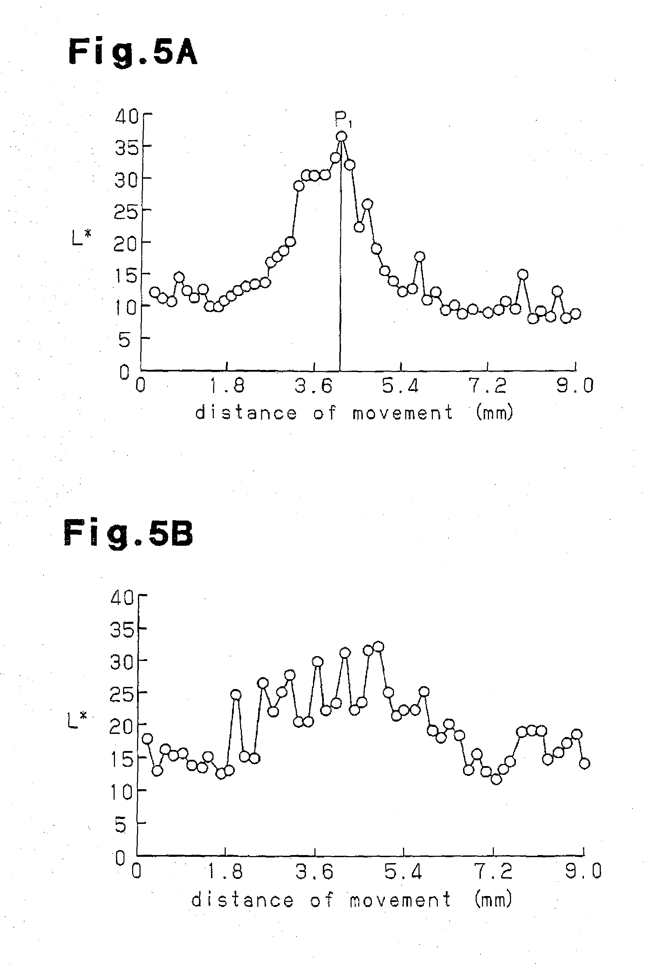

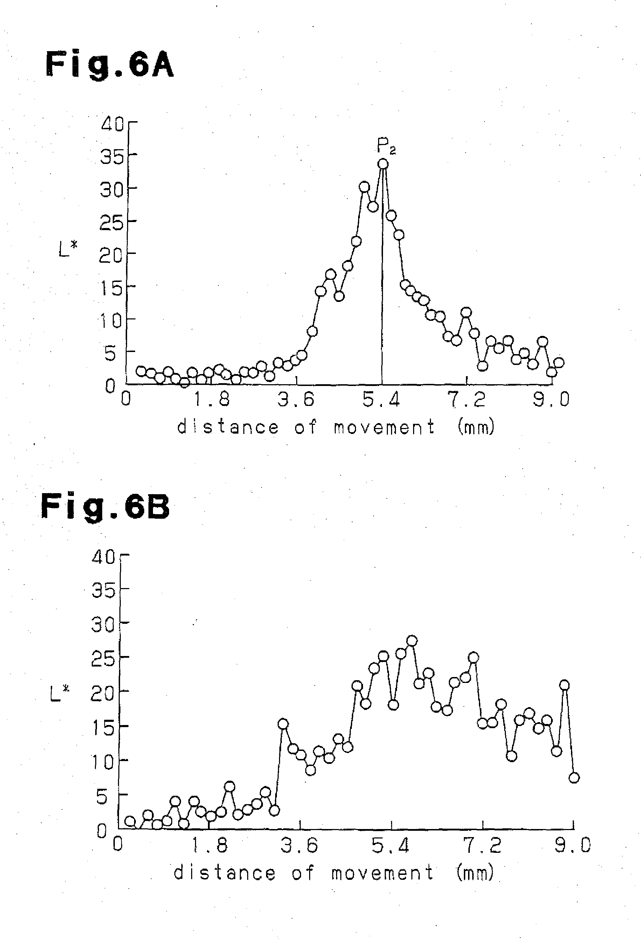

In addition, the relationship between the distance of movement (mm) and the L* value in the case where the angle of irradiation with light was 10° is shown in Figs. 5 (A) and 5(B), and the relationship between the distance of movement (mm) and the L* value in the case where the angle of irradiation with light was 25° is shown in Figs. 6 (A) and 6(B). Figs. 5(A) and 6 (A) show the case of Example 1, and Figs. 5(B) and 6(B) show the case of Comparative Example 1.

As a result of this, both in the case where the angle of irradiation with light was 10° and in the case where it was 25°, a clear (sharp) peak could be seen and the L* value was high in Example 1, while there was no clear peak (broad) and the L* value was low in Comparative Example 1. This fact indicates that the pattern on the coating film in Example 1 was excellent in terms of the distinctness in comparison with the pattern on the coating film in Comparative Example 1.

Furthermore, when Figs. 5(A) and 6(A) are compared, the distance over which peak $P_1$ moved in the case where the angle of irradiation with light was 10° was approximately 4.3 mm, while the distance over which peak $P_2$ moved in the case where the angle of irradiation with light was 25° was approximately 5.4 mm, and the position of the peak shifted to the right. This indicates that the bright portion in the pattern moved and the appearance of movement was excellent.

The present embodiment may be modified in the following manner.

Plural types of the first high boiling point solvent or the second high boiling point solvent may be used for a diluting solvent. In this case, the viscosity of the coating composition can be adjusted with more precision.

The solubility parameter (SP value) may be used when selecting the thermoplastic resin and the solvent.

Plural types of magnetic particles of different materials may be combined for use, or plural types of magnetic particles of different dimensions may be combined for use, as a magnetic particle. In this case, the pattern on the coating film can be made more original.

**Claims**

**1.** A coating composition for forming a pattern, **characterized by** containing a thermoplastic resin, magnetic particles with flaky form, a low boiling point solvent having a boiling point of 50°C or higher and 100°C or lower, and a high boiling point solvent having a boiling point that is higher than 100°C and 200°C or lower, wherein the viscosity 20 seconds to 60 seconds after application on a surface of an article to be coated is 2,000 mPa·s to 500,000 mPa·s in a normal state, the viscosity between 60 seconds and 120 seconds after application is no lower than 100,000 mPa·s, and is greater than the viscosity 20 seconds to 60 seconds after application, and said magnetic particles are oriented by a magnetic field after application, and thus, a coating film having a pattern is formed.

2. The coating composition for forming a pattern according to claim 1, **characterized in that** said thermoplastic resin is a vinyl acetate based resin, an acryl based resin or a cellulose acetate butyrate resin.

3. The coating composition for forming a pattern according to claim 1 or 2, **characterized by** having a nonvolatile content of 5 mass% to 15 mass%.

4. The coating composition for forming a pattern according to any of claims 1 to 3, **characterized by** containing a dye as a coloring agent.

5. A coated article, **characterized in that** a coating film having a pattern is formed on an article to be coated by applying the coating composition for forming a pattern according to any of claims 1 to 4 on the article to be coated, orienting said magnetic particles by a magnetic field, and then solidifying the coating composition in this state.

6. The coating composition for forming a pattern according to claim 2 or 3, **characterized in that** said thermoplastic resin is a vinyl acetate-vinyl chloride copolymer resin or an acryl resin.

7. A manufacturing method for the coating composition for forming a pattern according to any of claims 1 to 4, **characterized by** dissolving a thermoplastic resin in an organic solvent, thereby preparing resin solution, mixing magnetic particles with flaky form in the resin solution, and diluting the resin solution using a diluting solvent in which a low boiling point solvent having a boiling point of 50°C or higher and 100°C or lower, and a high boiling point solvent having a boiling point that is higher than 100°C and 200°C or lower, are mixed together.

8. The manufacturing method for the coating composition for forming a pattern according to Claim 7, **characterized in that** said high boiling point solvent is prepared by mixing together a first high boiling point solvent having a boiling point that is higher than 100°C and 150°C or lower, and a second high boiling point solvent having a boiling point that is higher than 150°C and 200°C or lower.

# Fig.1

# Fig.2

# Fig.3

# Fig.4

# Fig.5A

# Fig.5B

# Fig.6A

# Fig.6B

**EP 1 842 883 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5228427 A

- JP 2003176452 A

**21**